# EUROPEAN PATENT APPLICATION

(11) **EP 3 683 279 A1**
(43) Date of publication of application: **22.07.2020**
(21) Application number: 18856634.3
(22) Date of filing: 31.08.2018
(51) Int. Cl.: C09D 17/00, B01J 13/02, B41J 2/01, B41M 5/00, C09B 67/08, C09D 11/322

(54) **DISPERSION COMPOSITION FOR INK, AND WATER-BASED INK**

(30) Priority: 13.09.2017 JP 2017175300; 13.09.2017 JP 2017175301
(71) Applicant: Nippon Kayaku Kabushiki Kaisha, Tokyo 102-8172 (JP)
(72) Inventor: MISAWA Shunta, Tokyo 115-8588 (JP); HIGUCHI Hiroko, Tokyo 115-8588 (JP); SHIMIZU Shinsuke, Tokyo 115-8588 (JP); SASAKI Keijyou, Tokyo 115-8588 (JP); MASEKI Junya, Tokyo 115-8588 (JP); ITO Ryutarou, Tokyo 115-8588 (JP)
(74) Representative: Scott, Stephen John
(86) International application number: PCT/JP2018/032487
(87) International publication number: WO 2019/054215

(57) **Abstract**

A dispersion composition that has good storage stability, achieves high density of a colorant when used as ink, has good redispersibility after drying, and preserves the physical properties of ink when stored for a long period of time is provided. The dispersion composition comprises: (A) a dye and/or a pigment; (B) a styrene-(meth)acrylic copolymer; and (C) a compound represented by the following formula (1): 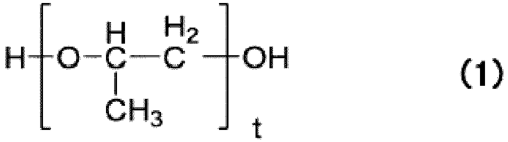 where t represents 1 to 5,
wherein a content of (C) the compound represented by the formula (1) is more than 0.18 mass%, and a sum total of a sodium ion concentration, a potassium ion concentration, and a lithium ion concentration in the ink dispersion composition is 6800 ppm or less.

## Description

### TECHNICAL FIELD

The present disclosure relates to a novel ink dispersion composition having extremely high storage stability and a water-based ink using the same.

### BACKGROUND

As digitalization of information progresses, inkjet printing has been widely used in office and home printers. In recent years, there have been many applications advanced to commercial printing, textile printing, and the like. As inkjet printing applications are expanding, a variety of colorants for use in inks are also being used depending on the applications, including water-soluble dyes such as conventional acidic dyes and direct dyes, water-insoluble coloring materials such as disperse dyes and pigments, and the like.

Disperse dyes are widely used for industrial dyeing of hydrophobic fibers such as polyester. A water-insoluble dye is dispersed in a dye bath or a color paste, and used for dyeing. As the dye infiltrates and diffuses in a dispersed state inside fibers under high temperature conditions, dyeing is caused by hydrogen bonding between fiber dyes, intermolecular force, or the like. If the dispersibility of the dye, especially the dispersibility at high temperature, is poor, aggregation of the dye occurs in the high-temperature dye bath, causing specks to easily form on the fibers (a phenomenon that results from poor dispersion of the dye during dyeing, in which the dye adheres in a dotted manner to the fibers, leading to generation of stains in the object to be dyed). Hence, for fiber dyeing, dispersants excellent in high temperature dispersibility, for example, anionic dispersants such as formaldehyde condensates of lignosulfonic acid, formaldehyde condensates of alkylnaphthalenesulfonic acid, and formaldehyde condensates of creosote oil sulfonic acid, have been mainly used conventionally.

Ink jet printing of polyester fibers using disperse dyes has also been carried out (Journal of the Japan Imaging Society, Vol. 41, No. 2, pp. 68-74 (2002) (NPL 1) and Senshoku Keizai Shimbun, Jan. 28, 2004, pp. 18-21 (NPL 2)), and the following methods have been mainly used: direct printing in which dye ink is applied (printed) to fibers and then heat treatment such as steaming is performed to implement dyeing; and thermal transfer printing in which dye ink is applied (printed) to a sheet of special transfer paper and subsequently the dye is sublimated and transferred from the transfer paper to fibers by heat. For dispersing disperse dye ink used for such printing, anionic dispersants used conventionally for industrial dyeing have been used (JP H9-291235 A (PTL 1) and JP H8-333531 A (PTL 2)). However, our studies revealed that these anionic dispersants are problematic not only in the sedimentation stability in dispersions, but also in the ejection stability of the resulting ink. JP 2003-246954 A (PTL 3) describes the use of a dispersant of the expression 1 in PTL 3. It was found that the dispersant exhibits good ejection stability, but is still problematic in sedimentation stability (storage stability).

In order to expand the field of use of printing processes using ink, there is ongoing need for ink compositions used for ink jet recording and the resulting colored objects to have high coloring property and good fastnesses such as light fastness and water resistance. Such ink compositions used for ink jet recording are strongly required to be stable as ink for a long period of time and to be redissolved or redispersed in water when dried.

In particular, disperse dyes are required to be stable over an extended period of time. It is generally known that a dye which exists in a dispersed state as particles, not as a molecule, in ink causes a sedimentation phenomenon over time due to aggregation of dye particles. This causes a concentration gradient in the ink, and the initial printing properties cannot be maintained. In the worst case, aggregated particles clog the nozzles, preventing the nozzles from ejecting the ink.

Therefore, there is a demand for development of an ink composition that has good fastnesses, high image density obtained by printing, and good storage stability. However, the conventional techniques have not been able to provide sufficient performance.

Inkjet ink compositions using a pigment include the ink disclosed in JP 4078679 B (PTL 6). This is an ink composition obtained by preparing a dispersion using a polymer dispersant. In addition, JP 4016483 B (PTL 5) discloses an ink composition using a self-dispersion type pigment.

In recent years, microcapsule pigments using a self-assembled pigment have been extensively studied and investigated as means for addressing the foregoing issues. JP 2675956 B (PTL 8) discloses a manufacturing method thereof. However, none of these ink compositions has yet provided products that fully satisfy the market requirements.

### CITATION LIST

### Patent Literatures

PTL 1: JP H9-291235 A
PTL 2: JP H8-333531 A
PTL 3: JP 2003-246954 A
PTL 4: JP 3534395 B2
PTL 5: JP 4016483 B2
PTL 6: JP 4078679 B2
PTL 7: WO 2010/013651 A1
PTL 8: JP 2675956 B2
PTL 9: JP 3839829 B2
PTL 10: WO 2014/129322 A1
PTL 11: WO 2013/115071 A1

### Non-patent Literatures

NPL 1: Journal of the Japan Imaging Society, Vol. 41, No. 2, pp. 68-74 (2002)
NPL 2: Senshoku Keizai Shimbun, Jan. 28, 2004, pp. 18-21
NPL 3: Chemical Engineering Dictionary, 4th Edition, pp. 46-47
NPL 4: DIC Technical Review No. 10/2004

### SUMMARY

### (Technical Problem)

It could therefore be helpful to provide an ink dispersion composition that offers good storage stability of a dispersion, has good stability when used as an ink composition, and preserves the physical properties of ink when stored for a long period of time.

### (Solution to Problem)

As a result of diligent investigation to solve the foregoing issues, we discovered that a dispersion containing a colorant using a styrene-acrylic copolymer and having significantly improved storage stability is obtained using an ink dispersion composition that comprises: (A) a dye and/or a pigment, (B) a styrene-(meth)acrylic copolymer, and (C) a compound represented by the following formula (1), wherein the content of (C) the compound represented by the following formula (1) is more than 0.18 mass%, and the sum total of the sodium ion concentration, the potassium ion concentration, and the lithium ion concentration in the ink dispersion composition is 6800 ppm or less.

That is, the present disclosure relates to 1) to 22) below.
1) An ink dispersion composition comprising: (A) a dye and/or a pigment; (B) a styrene-(meth)acrylic copolymer; and (C) a compound represented by the following formula (1): 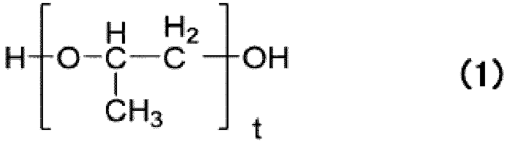 where t represents 1 to 5,
   wherein a content of (C) the compound represented by the formula (1) is more than 0.18 mass%, and a sum total of a sodium ion concentration, a potassium ion concentration, and a lithium ion concentration in the ink dispersion composition is 6800 ppm or less.
2) The ink dispersion composition according to 1), wherein the sum total of the sodium ion concentration, the potassium ion concentration, and the lithium ion concentration in the ink dispersion composition is 1000 ppm or more and 6800 ppm or less.
3) The ink dispersion composition according to 1) or 2), wherein a sum total of the sodium ion concentration and the potassium ion concentration in the ink dispersion composition is 100 ppm or more and 6800 ppm or less.
4) The ink dispersion composition according to any one of 1) to 3), wherein the component (A) and the component (B) form a core-shell structure, and a core layer of the core-shell structure is the component (A) and a shell layer of the core-shell structure is the component (B).
5) The ink dispersion composition according to any one of 1) to 4), wherein the component (A) is a dye.
6) The ink dispersion composition according to any one of 1) to 5), wherein the component (A) is at least one dye selected from a disperse dye, an oil-soluble dye, and a vat dye.
7) The ink dispersion composition according to any one of 1) to 6), wherein the component (A) is at least one dye selected from C.I. Disperse Yellow 54, C.I. Disperse Orange 25, C.I. Disperse Red 60, C.I. Disperse Blue 72, 359, and 360, C.I. Disperse Brown 26 and 27, and C.I. Solvent Orange 60.
**8)** The ink dispersion composition according to any one of 1) to 7), wherein the component (B) has a weight-average molecular weight of 1000 or more and 20000 or less.
9) The ink dispersion composition according to any one of 1) to 8), wherein the component (B) has a glass transition temperature of 45°C or more and 135°C or less.
10) The ink dispersion composition according to any one of 1) to 9), wherein the component (B) has an acid value of 50 mg KOH/g or more and 250 mg KOH/g or less.
11) The ink dispersion composition according to any one of 1) to 10), wherein the component (B) is a styrene-acrylic copolymer having, in a molecule thereof, a skeleton represented by the following formula (2) or (3): 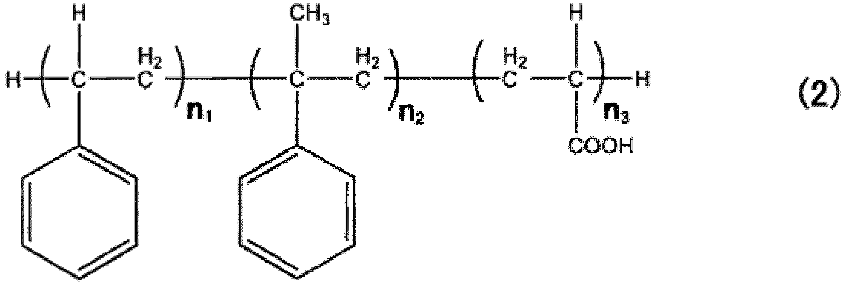 where n₁ to n₃ each represent an integer of 1 to 30, 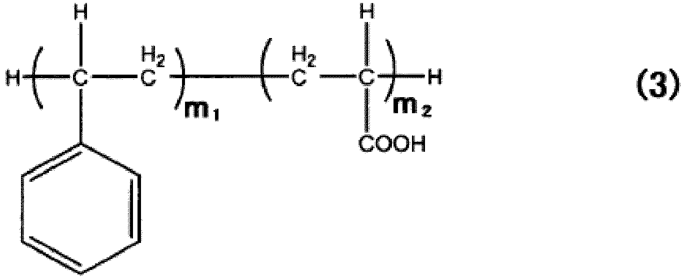 where m₁ and m₂ each represent an integer of 1 to 43.
12) The ink dispersion composition according to any one of 1) to 11), wherein t is 2 in the component (C).
13) The ink dispersion composition according to any one of 1) to 12), further comprising (D) a compound having, in a molecule thereof, both substituents of an amino group and a sulfo group.
14) The ink dispersion composition according to 13), wherein the component (D) is a compound represented by the following formula (4):

   H₂N-R-SO₃H (4)

   where R represents an alkylene group, an alkylidene group, or an arylene group which may have a substituent.
15) The ink dispersion composition according to any one of 1) to 14), further comprising (E) a water-soluble organic solvent.
16) The ink dispersion composition according to 15), wherein the component (E) is a water-soluble organic solvent having, in a molecule thereof, one or more hydroxy groups.
17) The ink dispersion composition according to any one of 1) to 16), wherein the component (A) has a number-average particle size of 10 nm to 500 nm.
18) A method of producing the ink dispersion composition according to any one of 1) to 17), the method comprising neutralizing and dissolving with an alkaline aqueous solution.
19) The ink dispersion composition according to any one of 1) to 17), further comprising (F) a defoamer.
20) The ink dispersion composition according to 19), wherein the component (F) is a nonionic surfactant.
21) The ink dispersion composition according to 19) or 20), further comprising (G) a preservative.
22) A water-based ink comprising the ink dispersion composition according to any one of 1) to 17) and 19) to 21).

### (Advantageous Effect)

It is thus possible to obtain an ink dispersion composition having excellent storage stability, and a water-based dispersion and an ink composition of a water-insoluble coloring material by using the same.

### DETAILED DESCRIPTION

The ink dispersion composition described above is an ink dispersion composition comprising: (A) a dye and/or a pigment; (B) a styrene-(meth)acrylic copolymer; and (C) a compound represented by the following formula (1), wherein a content of (C) the compound represented by the following formula (1) is more than 0.18 mass%, and a sum total of a sodium ion concentration, a potassium ion concentration, and a lithium ion concentration in the ink dispersion composition is 6800 ppm or less.

Preferably, the component (A) and the component (B) form a core-shell structure. Preferably, a core layer of the core-shell structure is the component (A), and a shell layer of the core-shell structure is the component (B).

It is conventionally considered that, in dispersion by anionic dispersants of water-insoluble coloring materials, the electrostatic repulsive force of the pigment surface generated mainly by adsorption of an ionic activator prevents the reaggregation of pigment particles and as a result a stable dispersion state is achieved. According to our presumption, because conventional anionic dispersants have weak adsorption force to coloring materials, dispersion stability in heat condition or over time is poor. In the dispersant of the core-shell structure in which the core layer is the component (A) and the shell layer is the component (B), the styrene-acrylic copolymer is the shell layer and covers the insoluble coloring matter, so that no aggregation of the coloring matter occurs and stability is improved.

### [Component (A): Dye and/or Pigment]

The component (A) is a dye and/or a pigment.

As used herein, the term "dye" refers to an organic coloring matter which is dyed onto fibers by an appropriate dyeing method. Examples thereof include a direct dye, a vat dye, a sulfur dye, a disperse dye, a basic dye, a naphthol dye, an acidic dye, an acidic mordant dye, a mordant dye, an oil-soluble dye, a reactive dye, a soluble vat dye, a sulfur vat dye, and an oxidation dye.

Specifically, examples of C.I. Disperse Yellow include C.I. Disperse Yellow 3, 4, 5, 7, 8, 9, 13, 23, 24, 30, 33, 34, 39, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 186, 192, 198, 199, 200, 202, 204, 210, 211, 215, 216, 218, 224, and 237. Examples of C.I. Disperse Orange include C.I. Disperse Orange 1, 1:1, 3, 5, 7, 11, 13, 17, 20, 21, 23, 24, 25, 25:1, 29, 30, 31, 32, 33, 37, 38, 42, 43, 44, 45, 47, 48, 49, 50, 53, 54, 55, 56, 57, 58, 59, 61, 66, 71, 73, 76, 78, 80, 86, 89, 90, 91, 93, 96, 97, 118, 119, 127, 130, 139, and 142. Examples of C.I. Disperse Red include C.I. Disperse Red 1, 4, 5, 7, 11, 12, 13, 15, 17, 27, 43, 44, 50, 52, 53, 54, 55, 55:1, 56, 58, 59, 60, 65, 70, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 158, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 283, 288, 298, 302, 303, 310, 311, 312, 320, 323, 324, 328, 359, 362, and 364. Other examples include, but are not limited to: C.I. Disperse Violet 1, 4, 8, 11, 17, 23, 26, 27, 28, 29, 31, 33, 35, 36, 38, 40, 43, 46, 48, 49, 50, 51, 52, 56, 57, 59, 61, 63, 69, 77, and 97; C.I. Disperse Green 9; C.I. Disperse Brown 1, 2, 4, 9, 13, 19, 26, and 27; C.I. Disperse Blue 3, 5, 7, 9, 14, 16, 19, 20, 26, 26:1, 27, 35, 43, 44, 54, 55, 56, 58, 60, 62, 64, 64:1, 71, 72, 72:1, 73, 75, 77, 79, 79:1, 81, 82, 83, 87, 91, 93, 94, 95, 64:1, 96, 102, 106, 108, 112, 113, 115, 118, 120, 122, 125, 128, 130, 131, 139, 141, 142, 143, 145, 146, 148, 149, 153, 154, 158, 165, 165:1, 165:2, 167, 171, 173, 174, 176, 181, 183, 185, 186, 187, 189, 197, 198, 200, 201, 205, 207, 211, 214, 224, 225, 257, 259, 266, 267, 270, 281, 284, 285, 287, 288, 291, 293, 295, 297, 301, 315, 330, 333, 334, 339, 341, 353, 354, 358, 359, 360, 364, 365, 366, and 368; C.I. Disperse Black 1, 3, 10, and 24; C.I. Solvent Yellow 114; C.I. Solvent Orange 60 and 67; C.I. Solvent Red 146; and C.I. Solvent Blue 36, 63, 83, 105, and 111.

As used herein, the term "pigment" refers to a white or colored powder which is insoluble in water, an organic solvent, or the like. Examples thereof include an organic pigment and an inorganic pigment. In the present disclosure, it may be an organic pigment or an inorganic pigment, yet an organic pigment is preferable.

Specific examples include: C.I. Pigment Yellow 74, 120, 128, 138, 151, 185, and 217; C.I. Pigment Orange 13, 16, 34, and 43; C.I. Pigment Red 122, 146, and 148; C.I. Pigment Violet 19 and 23; C.I. Pigment Blue 15, 15:1, 15:2, 15:3, 15:4, 15:5, and 15:6; and C.I. Pigment Green 7 and 8.

In the present disclosure, a dye is more preferably used. Even more preferably, at least one selected from a disperse dye, an oil-soluble dye, and a vat dye is used. Among the above dyes, those having higher thermal transfer ability include: C.I. Disperse Yellow 51, 54, 60, 71, 82, and 211; C.I. Disperse Orange 5, 7, 20, 23, 24, 25, and 25:1; C.I. Disperse Red 4, 11, 50, 53, 59, 60, 239, 240, and 364; C.I. Disperse Violet 8, 11, 17, 26, 27, 28, and 36; C.I. Disperse Blue 3, 5, 26, 35, 55, 56, 72, 81, 91, 108, 334, 359, 360, and 366; C.I. Disperse Brown 26 and 27; C.I. Solvent Yellow 114; C.I. Solvent Orange 60 and 67; C.I. Solvent Red 146; and C.I. Solvent Blue 36, 63, 83, 105, and 111. More preferred are: C.I. Disperse Yellow 54; C.I. Disperse Orange 25; C.I. Disperse Red 60; C.I. Disperse Blue 72, 359, and 360; C.I. Disperse Brown 26 and 27; and C.I. Solvent Orange 60. Particularly preferred are: C.I. Disperse Yellow 54; C.I. Disperse Orange 25; and C.I. Disperse Red 60.

These coloring materials may be in the form of a powdery or bulky dry coloring matter or a wet cake or slurry, and may contain a small amount of a dispersant such as a surfactant for the purpose of suppressing the aggregation of the coloring material particles during or after synthesis of the coloring material. Commercially available coloring materials have grades such as for, e.g., industrial dyeing, resin coloring, ink, toner, and inkjet use, and their production methods, purity, pigment particle size, and the like are different from each other. In order to suppress the aggregation after pulverization, a coloring material having a smaller particle size is preferable, and considering the influence on the dispersion stability and the ejection accuracy of the ink, it is preferable to use a coloring material with as little impurities as possible. As a coloring material for black, it is possible to use a dye obtained by blending a blue-based dye as a main ingredient with an orange-based dye and a red-based dye. It may also contain a small amount of other water-insoluble coloring materials within the range of color tone adjustment.

The above-described dye may be obtained by blending, for example, in preparation of a black ink, a blue dye as a main ingredient with an orange dye and a red dye as appropriate so as to be toned to a black color, which may be used as a black dye. For the purpose of finely adjusting the color tone of, for example, blue, orange, red, violet, or black to a favorable color tone, two or more dyes may be blended.

The content of the component (A) in the ink dispersion composition is preferably in the range of 0.1 mass% to 30 mass%, and more preferably in the range of 5 mass% to 20 mass%. When the content of the component (A) in the ink dispersion composition is within the above range, the composition exhibits excellent storage stability and sedimentation properties.

### [Component (B): Styrene-(meth)acrylic Copolymer]

The component (B) is a styrene-(meth) acrylic copolymer, which is a copolymer of a styrenic monomer and a (meth)acrylic monomer. As used herein, the term "(meth)acrylic" means "acrylic" and/or "methacrylic". Specific examples of these copolymers include an (α-methyl)styrene-acrylic acid copolymer, an (α-methyl)styrene-acrylic acid-acrylic acid ester copolymer, an (α-methyl)styrene-methacrylic acid copolymer, an (α-methyl)styrene-methacrylic acid-acrylic acid ester copolymer, an (α-methyl)styrene-(anhydrous) maleic acid copolymer, an acrylic acid ester-(anhydrous) maleic acid copolymer, an (α-methyl)styrene-acrylic acid ester-(anhydride) maleic acid copolymer, an acrylic acid ester-allylsulfonic acid ester copolymer, an acrylic ester-styrene sulfonic acid copolymer, an (α-methyl)styrene-methacrylic sulfonic acid copolymer, a polyester-acrylic acid copolymer, a polyester-acrylic acid-acrylic acid ester copolymer, a polyester-methacrylic acid copolymer, and a polyester-methacrylic acid-acrylic acid copolymer ester. Among these, preferred compounds containing an aromatic hydrocarbon group are those containing styrene. As used herein, the term "(α-methyl)styrene" is construed as including α-methyl styrene and styrene.

Specific examples of the component (B) include, but are not limited to, Joncryl® 52J, 57J, 60J, 63J, 70J, JDX-6180, HPD-196, HPD 96J, PDX-6137 A, 6610, JDX-6500, JDX-6639, PDX-6102B, and PDX-6124 (all manufactured by BASF). As used herein, ® means a registered trademark in Japan, other countries, or both.

The component (B) has a weight-average molecular weight of preferably from 1000 to 20000, more preferably from 2000 to 19000, and particularly preferably from 4000 to 17000. If the weight-average molecular weight is too small, the dispersion stabilizing ability for a sublimable dye decreases, while if it is too large, the ability to disperse the sublimable dye decreases and the viscosity of the ink may excessively increase. Both are not preferable. The weight-average molecular weight of the styrene-acrylic acid copolymer is measured by a GPC (gel permeation chromatography) method. The glass transition temperature of the styrene-(meth)acrylic copolymer used as the component (B) is preferably from 45°C to 135°C, more preferably from 55°C to 120°C, and particularly preferably from 60°C to 110°C. The acid value of the styrene-(meth)acrylic copolymer used as the component (B) is preferably from 50 mg KOH/g to 250 mg KOH/g, more preferably from 100 mg KOH/g to 250 mg KOH/g, and particularly preferably from 150 mg KOH/g to 250 mg KOH/g. An excessively small acid value causes deterioration in the solubility of the resin in water, which tends to lower the dispersion stabilizing ability for the sublimable dye, while an excessively large acid value increases the affinity with an aqueous medium, which causes bleeding to easily occur in the printed image. Both are not preferable. The acid value of the resin, which represents the amount in milligrams of KOH required to neutralize 1 g of the resin, is measured in accordance with JIS-K3054.

The component (B), which is a styrene-(meth)acrylic copolymer, is preferably a component having in its molecule a skeleton represented by the foregoing formula (2) and/or formula (3). In formula (2), n₁ to n₃ each represent an integer of 1 to 30. In formula (3), m₁ and m₂ each represent an integer of 1 to 43.

In this respect, specific examples of the preferred styrene-(meth)acrylic copolymer of the component (B) include Joncryl 67 (weight-average molecular weight = 12,500, acid value = 213), Joncryl 678 (weight-average molecular weight = 8,500, acid value = 215), Joncryl 682 (weight-average molecular weight = 1,700, acid value = 230), Joncryl 683 (weight-average molecular weight = 8,000, acid value = 160), and Joncryl 690 (weight-average molecular weight = 16,500, acid value = 240).

The ink dispersion composition may also be prepared by using two different styrene-acrylic copolymer dispersants when dispersing a coloring matter.

For example, the ink dispersion composition is preferably produced by the following method.

A styrene-acrylic copolymer is charged into a water-soluble organic solvent and the temperature is raised to 90°C to 120°C to dissolve it to prepare a styrene-acrylic copolymer solution. Further, a styrene-acrylic copolymer is suspended in water, a neutralizing agent is added thereto, and the temperature is raised to 80°C to 95°C to prepare a neutralized solution. The styrene-acrylic copolymer solution and the neutralized solution thus prepared are mixed with a colorant and the mixture is dispersed. In this way, a styrene-acrylic copolymer dispersion composition containing a colored body can be produced.

It is also preferable to produce the styrene-acrylic copolymer dispersion composition containing a dye and/or a pigment, for example, by the following method.

A styrene-acrylic copolymer is charged into a water-soluble organic solvent and the temperature is raised to 90°C to 120°C to prepare a styrene-acrylic copolymer solution. A neutralizing agent and water are then charged to the solution, the temperature is lowered to make an emulsion liquid (an emulsion or microemulsion liquid), the emulsion liquid thus prepared is mixed with a dye and/or a pigment, and the mixture is dispersed. In this way, a styrene-acrylic copolymer dispersion composition containing the dye and/or the pigment can be produced. Examples of the water-soluble organic solvent include glycerin (boiling point: 290°C), ethylene glycol, propylene glycol (boiling point: 188°C), dipropylene glycol (boiling point: 230°C), butyl carbitol (boiling point: 231°C), methyl triglycol, triethylene glycol, butyl triglycol, butyl carbitol acetate (boiling point: 247°C), diethylene glycol, 1,5-pentanediol, 1,6-hexanediol, 1,2-hexanediol, methyl diglycol, tripropylene glycol, methanol (boiling point: 64°C), ethanol (boiling point: 78°C), 1-propanol (boiling point: 97°C), 2-propanol (boiling point: 82°C), 1,2-methoxyethane (boiling point: 93°C), tetrahydrofuran (boiling point: 66°C), and p-dioxane (boiling point: 101°C). These water-soluble organic solvents may be used alone or in combination of at least two thereof.

Since the emulsion liquid before mixing with the dye and/or the pigment is prepared by neutralizing with a neutralizing agent and mixing with water, it is necessary to use a neutralizing agent. Examples of the neutralizing agent include hydroxides of alkali metals, hydroxides of alkaline earth metals, aliphatic amine compounds, and alcohol amine compounds.

Examples of alkali metal hydroxides include lithium hydroxide, sodium hydroxide, and potassium hydroxide. Examples of hydroxides of alkaline earth metals include beryllium hydroxide, magnesium hydroxide, calcium hydroxide, and strontium hydroxide. The neutralizing agent is preferably a hydroxide of an alkali metal, more preferably lithium hydroxide, sodium hydroxide, and potassium hydroxide, and further preferably potassium hydroxide.

Examples of the alcohol amine compound include monoethanolamine, diethanolamine, triethanolamine, monopropanolamine, dipropanolamine, tripropanolamine, methylethanolamine, dimethylethanolamine, and N-methyldiethanolamine; among these preferred are tertiary amines, and more preferred is triethanolamine.

Examples of the aliphatic amine compound include ammonia, monomethylamine, dimethylamine, trimethylamine, monoethylamine, diethylamine, and triethylamine; among these preferred is ammonia or triethylamine.

These neutralizing agents may be used alone or in combination of at least two thereof.

The amount of the emulsion liquid to be used is preferably from 10% to 200%, more preferably from 10% to 150%, and particularly preferably from 20% to 100%, based on the mass of the dye and/or the pigment.

In mixing the dye and/or the pigment with the emulsion liquid and dispersing the mixture, the dispersing may be performed using a sand mill (bead mill), a roll mill, a ball mill, a paint shaker, an ultrasonic disperser, or a microfluidizer; among these preferred is a sand mill (bead mill). In pulverizing the coloring material in a sand mill (bead mill), the pulverizing is preferably performed under the condition of increased pulverization efficiency by, for example, using beads of small diameter and increasing the filling rate of beads, and after the pulverization treatment, elementary particles are preferably removed by filtration, centrifugal separation, or the like. In addition, in terms of increasing the pulverization efficiency as some ink dispersion compositions have foaming properties, it is preferable to adjust pulverization conditions so that foaming is suppressed as much as possible during pulverization. In some cases, for example, a silicone- or acetylene alcohol-based defoamer may be added in trace amounts at the time of pulverizing the pigment. As some defoamers inhibit dispersion and microparticulation, however, it is necessary to use the one not affecting the microparticulation or the stability after dispersion.

After the dispersing or post-treatment such as filtration, the dispersion can be diluted with a small amount of water to adjust the coloring material to a desired concentration.

In the ink dispersion composition, the number-average particle size of the component (A) is preferably from 10 nm to 500 nm. When the number-average particle size of the component (A) is from 10 nm to 500 nm, the composition exhibits excellent storage stability and sedimentation properties. The number-average particle size is measured using a dynamic light scattering-type particle size analyzer or according to a small angle X-ray scattering method.

In the ink dispersion composition, the content of the component (B) is preferably in the range of 5 mass% to 250 mass%, and more preferably in the range of 20 mass% to 150 mass%, with respect to the component (A). When the content of the component (B) in the ink dispersion composition is within the above range, the composition exhibits excellent storage stability and sedimentation properties.

In the case where the component (A) and the component (B) form a core-shell structure and a core layer is the component (A) and a shell layer is the component (B), the mass ratio (core layer : shell layer) between the dye and/or the pigment of the core layer and the styrene-(meth)acrylic copolymer of the shell layer is preferably in the range of 90:10 to 25:75, and more preferably in the range of 70:30 to 50:50. When the mass ratio between the core layer and the shell layer is within the above range, the composition exhibits excellent storage stability and sedimentation properties.

### [Component (C): Compound Represented by Formula (1)]

The compound represented by formula (1) contained in the ink dispersion composition is a propylene glycol-based compound. In formula (1), t represents an integer of 1 to 5, preferably an integer of 1 to 3, and more preferably 1 or 2. Specific examples thereof include propylene glycol and dipropylene glycol.

In the ink dispersion composition, the content of the component (C) is more than 0.18 mass%. If the content of the component (C) is not more than 0.18 mass%, it is not possible to sufficiently improve the storage stability of the composition. In the ink dispersion composition, the content of the component (C) is preferably in the range of 1 mass% to 60 mass%, and more preferably in the range of 10 mass% to 30 mass%.

### [Component (D): Compound Having Both Substituents of an Amino Group and a Sulfo Group in its Molecule]

The component (D) is a compound having in its molecule both substituents of an amino group and a sulfo group. It is considered that this compound is ionically bonded to the carboxy group of the component (B) and behaves as if it has a terminal sulfo group, thereby improving the stability. As the component (D), a compound represented by formula (4) is preferable. In formula (4), R represents an alkylene group which may have a substituent, an alkylidene group which may have a substituent, or an arylene group which may have a substituent. The phrase "an alkylene group which may have a substituent" refers to an alkylene group which is saturated or unsaturated, is a chain or cyclic (preferably C1-C20) alkylene group, and may have a hetero atom. Examples thereof include a methylene group, an ethylene group, a propylene group, a butylene group, a cyclopentylene group, a cyclohexylene group, a norbornylene group, and an adamantylene group; among these preferred are a (C1-C10) alkylene group, more preferred is a (C1-C5) alkylene group, and particularly preferred are a methylene group, an ethylene group, and a propylene group. Examples of the substituent which may be present in the alkylene group include: a halogen atom; a cyano group; a hydroxy group; a carboxy group; a sulfo group; a sulfamoyl group; a (C1-C4) alkoxy group; a (C1-C4) alkoxy group substituted with at least one selected from the group consisting of a hydroxy group, a (C1-C4) alkoxy group; a sulfo group, and a carboxy group; an N-alkylaminosulfonyl group; an N-phenylaminosulfonyl group; a phospho group; a nitro group; an acyl group; an ureido group; and a (C1-C6) alkyl group substituted with an acylamino group or the like substituted with at least one selected from the group consisting of an acylamino group, a (C1-C4) alkoxy group, a sulfo group, and a carboxy group. The phrase "an alkylidene group which may have a substituent" refers to an alkylidene group which is saturated or unsaturated, is a chain or cyclic (preferably C1-C20) alkylidene group, and may have a hetero atom. Examples thereof include an ethylidene group, a propylidene group, a butylidene group, a cyclopentylidene group, a cyclohexylidene group, a norbornylidene group, and an adamantylidene group; among these preferred is a (C1-C10) alkylidene group, more preferred is (C1-C5) alkylidene group, and particularly preferred are an ethylidene group or a propylidene group. Examples of the substituent which may be present in the alkylidene group are the same as those listed for the alkylene group. The phrase "an arylene group which may have a substituent" refers to a (preferably C1-C20) arylene group which may have a hetero atom. Examples thereof include a phenylene group, a thienylene group, and a pyrrolylene group, in which two or more ring structures may be condensed with each other as is the case with, for example, a naphthylene group, an anthranylene group, a phenanthrylene group, or a quinolylene group. Examples of the substituent which may be present in the arylene group are the same as those listed for the alkylene group. R may have an ester structure (-COO-), an ether structure (-O-), or a keto structure (-(C=O)-). Specific examples of the compound represented by formula (4) include taurine, 4-amino-1-naphthalenesulfonic acid, hydroxylaminosulfonic acid, 5-amino-1-naphthalenesulfonic acid, hydroxylaminosulfonic acid, 6 amino-1-naphthalenesulfonic acid, hydroxylaminosulfonic acid, 3-amino-2,7-naphthalenedisulfonic acid, 2-amino-1,4-benzenesulfonic acid, and 4-aminobenzenesulfonic acid.

In the ink dispersion composition, the content of the component (D) is preferably in the range of 0.1 mass% to 40 mass%, and more preferably in the range of 1 mass% to 20 mass%. When the content of the component (D) in the ink dispersion composition is within the above range, the stability of the ink dispersion composition is improved by solvation due to the influence of the sulfo group.

### [Component (E): Water-Soluble Organic Solvent]

The ink dispersion composition may further contain a water-soluble organic solvent (E). Specific examples of the water-soluble organic solvent include: (C1-C4) alcohols such as methanol, ethanol, propanol, isopropanol, butanol, isobutanol, secondary butanol, and tertiary butanol; carboxylic acid amides such as N,N-dimethylformamide and N,N-dimethylacetamide; lactams such as 2-pyrrolidone, hydroxyethyl-2-pyrrolidone, N-methyl-2-pyrrolidone, and N-methylpyrrolidin-2-one; cyclic ureas such as 1,3-dimethylimidazolidin-2-one and 1,3-dimethylhexahydropyrimido-2-one; ketones or ketoalcohols such as acetone, methyl ethyl ketone, and 2-methyl-2-hydroxypentane-4-one; cyclic ethers such as tetrahydrofuran and dioxane; mono-, oligo- or polyalkylene glycols or thioglycols having C2-C6 alkylene units such as ethylene glycol, 1,3-propane diol, 1,2-butylene glycol, 1,4-butylene glycol, 1,6-hexylene glycol, diethylene glycol, triethylene glycol, tetraethylene glycol, polyethylene glycol, polypropylene glycol (represented by formula (1), excluding those with t being 5 or less), thiodiglycol, and dithiodiglycol; polyols (preferably triols) such as trimethylolpropane, glycerin, and hexane-1,2,6-triol; (C1-C4) alkyl ethers of polyhydric alcohols such as ethylene glycol monomethyl ether, ethylene glycol monoethyl ether, diethylene glycol monomethyl ether, diethylene glycol monoethyl ether, diethylene glycol monobutyl ether (butyl carbitol), triethylene glycol monomethyl ether, and triethylene glycol monoethyl ether; γ-butyrolactone; and dimethyl sulfoxide. These organic solvents may be used alone or in combination of at least two thereof. As used herein, the phrase "water-soluble organic solvent (E)" refers to a water-soluble organic solvent other than those listed in the section "Component (C): Compound Represented by Formula (1)".

Although the water-soluble organic solvent also includes substances which are solid at room temperature, such as trimethylolpropane, they are water-soluble even in a solid state and can be used for the same purpose as the water-soluble organic solvent when dissolved in water. They are thus described herein in the category of water-soluble organic solvent for convenience. The component (E) is preferably a water-soluble organic solvent having in its molecule one or more hydroxy groups. In the ink dispersion composition, the content of the component (E) is preferably in the range of 1 mass% to 60 mass%, and more preferably in the range of 10 mass% to 30 mass%. When the content of the component (E) in the ink dispersion composition is within the above range, it is possible to retain an O/W emulsion composition, and thus to prepare a core-shell coloring matter dispersion, contributing to stability improvement.

### [Regarding Sodium Ion Concentration, Potassium Ion Concentration, and Lithium Ion Concentration]

In the ink dispersion composition, the sum total of the sodium ion concentration, the potassium ion concentration, and the lithium ion concentration is 6800 ppm or less, and is preferably 1000 ppm or more and 6800 ppm or less. More preferably, the sum total of the sodium ion concentration and the potassium ion concentration is 100 ppm or more and 6800 ppm or less. Further preferably, the sum total of the sodium ion concentration and the potassium ion concentration is 100 ppm or more and 6000 ppm or less. The respective ions can be measured by ion chromatography (for example, DX-320 manufactured by Nippon Dionex K.K.). As used herein, "ppm" is based on mass.

When the sum total of the sodium ion concentration, the potassium ion concentration, and the lithium ion concentration in the ink dispersion composition is 6800 ppm or less, the storage stability is improved. When the sum total of the sodium ion concentration, the potassium ion concentration, and the lithium ion concentration in the ink dispersion composition is 1000 ppm or more, the ejection stability is improved.

When the sum total of the sodium ion concentration and the potassium ion concentration in the ink dispersion composition is 6800 ppm or less, the storage stability is improved. When the sum total of the sodium ion concentration and the potassium ion concentration in the ink dispersion composition is 100 ppm or more, the ejection stability is improved.

Each ion concentration in the ink dispersion composition according to the present disclosure is the sum of the corresponding ion concentrations in the emulsion liquid and the dye. The ion concentration in the emulsion liquid is greater than the ion concentration in the dye, and the ion concentrations are adjusted so that their sum is 6800 ppm or less. The concentration of each of the ions (Na, K, and Li) in the emulsion liquid can be controlled by the degree of neutralization of the resin used in emulsion liquid production or the addition amount of alkali hydroxide or the like used in neutralization. The concentration of each of the ions in the dye can be controlled to the desired concentration by an existing dye purification method such as a hydrochloric acid method or a solvent method.

### [Component (F): Defoamer]

It is also possible to add (F) a defoamer to the ink dispersion composition. A defoamer refers to a substance having an action of extinguishing foam or suppressing foaming in a solution, including, for example, an oily substance with low volatility and high diffusing ability (such as higher alcohol) and a nonionic surfactant.

Examples of nonionic surfactants include: ethers such as polyoxyethylene nonylphenyl ether, polyoxyethylene octylphenyl ether, polyoxyethylene dodecyl phenyl ether, polyoxyethylene oleyl ether, polyoxyethylene lauryl ether, and polyoxyethylene alkyl ether; esters such as polyoxyethylene oleic acid ester, polyoxyethylene distearic acid ester, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyne-4,7-diol, 3,6-dimethyl-4-octyne-3,6-diol, 3,5-dimethyl-1-hexyne-3-ol; Surfynol 104, 105, 82, 465, Olfine STG, etc. (all manufactured by Nissin Chemical Industry Co., Ltd.); and polyglycol ethers (e.g., Tergitol 15-S-7 manufactured by SIGMA-ALDRICH). Among these, acetylene glycol-based defoamers are preferred, and more preferred are Surfynol 104, 105, 82, and 465 manufactured by Nissin Chemical Industry Co., Ltd. In the ink dispersion composition, the content of the component (F) is preferably in the range of 0.01 mass% to 0.5 mass%, and more preferably in the range of 0.05 mass% to 0.3 mass%. Adjusting the content of the component (F) in the ink dispersion composition within the above range provides a defoaming effect during the dispersing, enabling the dispersion to proceed efficiently with no adverse effect on the dispersion stability.

### [Component (G): Preservative]

It is also possible to add a preservative (G) to the ink dispersion composition.

Examples of the preservative include organic sulfur-based compounds, organic nitrogen sulfur-based compounds, organic halogen-based compounds, haloaryl sulfone-based compounds, iodopropargyl-based compounds, haloalkylthio-based compounds, nitrile-based compounds, pyridine-based compounds, 8-oxyquinoline-based compounds, benzothiazole-based compounds, isothiazoline-based compounds, dithiol-based compounds, pyridine oxide-based compounds, nitropropane-based compounds, organic tin-based compounds, phenolic compounds, quaternary ammonium salt-based compounds, triazine-based compounds, thiazine-based compounds, anilide-based compounds, adamantane-based compounds, dithiocarbamate-based compounds, brominated indanone-based compounds, benzyl bromoacetate-based compounds, and inorganic salt-based compounds. Without limitation, specific examples of organic halogen-based compounds include sodium pentachlorophenol, specific examples of pyridine oxide-based compounds include sodium 2-pyridinethiol-1-oxide, and specific examples of isothiazoline-based compounds include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Specific examples of other preservatives include anhydrous sodium acetate, sodium sorbate, sodium benzoate, and Proxel® GXL(S) and Proxel® XL-2(S) (Proxel is a registered trademark in Japan, other countries, or both) manufactured by Arch Chemicals, Inc.

In the ink dispersion composition, the content of the component (G) is preferably in the range of 0.01 mass% to 0.5 mass%, and more preferably in the range of 0.1 mass% to 0.3 mass%. Adjusting the content of the component (G) in the ink dispersion composition within the above range may provide a bactericidal action, suppressing viscosity increase.

### [Other Ingredients]

In addition to the components (A) to (G), the ink dispersion composition may further contain, for example, an antifungal agent, a pH adjuster, a chelating reagent, a rust preventive agent, a water-soluble ultraviolet absorber, a water-soluble polymer compound, a coloring matter solubilizer, an antioxidant, and/or a surfactant.

### (Antifungal Agent)

Examples of the antifungal agent include sodium dehydroacetate, sodium benzoate, sodium pyridinethione-1-oxide, p-hydroxybenzoic acid ethyl ester, 1,2-benzisothiazolin-3-one, and salts thereof. When an antifungal agent is used, it is preferably used in an amount of 0.02 mass% to 1.00 mass% in the ink dispersion composition.

### (pH Adjuster)

As the pH adjuster, any substance can be used as long as the pH of the ink can be controlled within the range of approximately 5 to 11 without adversely affecting the ink to be prepared. Specific examples thereof include: alkanolamines such as diethanolamine, triethanolamine, and N-methyldiethanolamine; alkali metal hydroxides such as lithium hydroxide, sodium hydroxide, and potassium hydroxide; ammonium hydroxide (ammonia water); carbonates of alkali metals such as lithium carbonate, sodium carbonate, sodium hydrogencarbonate, and potassium carbonate; alkali metal salts of organic acids such as potassium acetate; and inorganic bases such as sodium silicate and disodium phosphate.

### (Chelating Reagent)

Specific examples of the chelating reagent include sodium ethylenediaminetetraacetate, sodium nitrilotriacetate, sodium hydroxyethylethylenediamine triacetate, sodium diethylenetriamine pentaacetate, and sodium uracil diacetate.

### (Rust Preventive Agent)

Examples of the rust preventive agent include acidic sulfite, sodium thiosulfate, ammonium thioglycolate, diisopropylammonium nitrite, pentaerythritol tetranitrate, and dicyclohexylammonium nitrite.

### (Water-Soluble Ultraviolet Absorber)

Examples of the water-soluble ultraviolet absorber include sulfonated benzophenone-based compounds, benzotriazole-based compounds, salicylic acid-based compounds, cinnamic acid-based compounds, and triazine-based compounds.

### (Water-Soluble Polymer Compound)

Examples of the water-soluble polymer compound include polyvinyl alcohols, cellulose derivatives, polyamines, and polyimines.

### (Antioxidant)

Examples of the antioxidant include a variety of organic and metal complex-based anti-fading agents. Examples of the organic anti-fading agents include hydroquinones, alkoxyphenols, dialkoxyphenols, phenols, anilines, amines, indans, chromans, alkoxyanilines, and heterocycles.

### (Surfactant)

Examples of the surfactant include known surfactants such as anionic, cationic, nonionic, silicone-based, and fluorine-based surfactants. Examples of anionic surfactants include alkylsulfonates, alkylcarboxylates, α-olefin sulfonates, polyoxyethylene alkyl ether acetates, N-acylamino acids and salts thereof, N-acylmethyltaurine salts, alkyl sulfate polyoxyalkyl ether sulfates, alkyl sulfate polyoxyethylene alkyl ether phosphates, rosin acid soap, castor oil sulfates, lauryl alcohol sulfates, alkylphenol-type phosphoric acid ester, alkyl-type phosphoric acid ester, alkylaryl sulfonate, diethyl sulfosuccinate, diethylhexylsulfosuccinate, and dioctylsulfosuccinate. In the present disclosure, it is particularly preferable to contain an anionic surfactant. Among them, sulfosuccinic acid, specifically, diethylsulfosuccinate, diethylhexylsulfosuccinate, dioctylsulfosuccinate, and the like are particularly preferable.

Examples of cationic surfactants include 2-vinylpyridine derivatives and poly4-vinylpyridine derivatives.

Examples of amphoteric surfactants include lauryldimethylaminoacetic acid betaine, 2-alkyl-N-carboxymethyl-N-hydroxyethylimidazolinium betaine, coconut oil fatty acid amidopropyldimethylaminoacetic acid betaine, polyoctylpolyaminoethylglycine, and imidazoline derivatives.

Examples of nonionic surfactants include: ethers such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; esters such as polyoxyethylene oleic acid ester, polyoxyethylene distearic acid ester, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyne-4,7-diol, 3,6-dimethyl-4-octyne-3,6-diol, and 3,5-dimethyl-1-hexyne-3-ol; Surfynol 104, 105, 82, 465, Olfine STG, etc. (all manufactured by Nissin Chemical Industry Co., Ltd.); and polyglycol ethers (e.g., Tergitol 15-S-7 manufactured by SIGMA-ALDRICH).

Examples of the silicone-based surfactants include polyether-modified siloxane and polyether-modified polydimethylsiloxane. Specific examples of commercially available products include BYK-347 (polyether-modified siloxane), BYK-345, and BYK-348 (polyether-modified polydimethylsiloxane), all manufactured by BYK Japan KK.

Examples of the fluorine-based surfactants include perfluoroalkyl sulfonic acid compounds, perfluoroalkyl carboxylic acid-based compounds, perfluoroalkyl phosphoric acid ester compounds, perfluoroalkyl ethylene oxide adducts, and polyoxyalkylene ether polymer compounds having a perfluoroalkyl ether group on a side chain. Specific examples of commercially available products include Zonyl TBS, FSP, FSA, FSN-100, FSN, FSO-100, FSO, FS-300, Capstone FS-30, FS-31 (manufactured by DuPont); PF-151N, and PF-154N (manufactured by Omnova).

The above-described ink preparation agents are used alone or in combination.

The ink dispersion composition preferably has a dispersion composition that contains particles such that, when a circumscribed circle and an inscribed circle are applied concentrically to each particle on an STEM image, for more than half of the particles, the diameter of the inscribed circle is 5 nm or more and less than 300 nm and the roundness defined by the difference in radius between the concentric circumscribed circle and inscribed circle is 20 nm or less.

The ink dispersion composition is extremely excellent in storage stability. Accordingly, this composition can provide excellent ejection stability when used for water-based inks, particularly water-based inks for inkjet printing. In the case of a water-based ink, it is preferable that the above-described dye and/or pigment is contained in the water-based ink in an amount of 0.3 mass% to 10 mass% in terms of pure colorant. A water-based ink may be obtained with an additive such as the foregoing preservative, antifungal agent, pH adjuster, chelate agent, rust preventive agent, water-soluble ultraviolet absorber, water-soluble polymer compound, coloring matter solubilizer, antioxidant, or surfactant.

The pH of the water-based ink is preferably 5 to 11, and more preferably 7 to 10, for the purpose of improving storage stability. The pH and surface tension of the ink composition can be appropriately adjusted with the foregoing pH adjuster or surfactant.

The ink dispersion composition according to the present disclosure can be used in various fields. The water-based ink is, however, suitable for water-based writing ink, water-based printing ink, information-recording ink, textile printing, and the like, and is particularly preferably used as ink for ink jet recording.

### EXAMPLES

Hereinafter, the present disclosure will be described in more detail with reference to examples, yet the present disclosure is not limited by these examples. In the examples, "parts" means "parts by mass", and "%" means "mass%".

### [Emulsion Liquid 1]

To sodium hydroxide (3.7 parts), deionized water (96.3 parts), and propylene glycol (60 parts) was added 40 parts of Joncryl 683 (a styrene-(meth)acrylic copolymer, manufactured by BASF, having in its molecule a skeleton of formula (2) with a weight-average molecular weight of 8,000, a glass transition temperature of 75°C, and an acid value of 160 mg KOH/g), the mixture was then stirred at raised temperatures of 90°C to 120°C for 5 hours, and an emulsion liquid 1 of Joncryl 683 was obtained.

### [Emulsion Liquid 2]

To sodium hydroxide (4.1 parts), deionized water (95.9 parts), and propylene glycol (60 parts) was added 40 parts of Joncryl 690 (a styrene-(meth)acrylic copolymer, manufactured by BASF, having in its molecule a skeleton of formula (3) with a weight-average molecular weight of 16,500, a glass transition temperature of 102°C, and an acid value of 240 mg KOH/g), the mixture was then stirred at raised temperatures of 90°C to 120°C for 5 hours, and an emulsion liquid 2 of Joncryl 690 was obtained.

### [Emulsion Liquid 3]

40 parts of Joncryl 690 (a styrene-(meth)acrylic copolymer, manufactured by BASF, having in its molecule a skeleton of formula (3) with a weight-average molecular weight of 16,500, a glass transition temperature of 102°C, and an acid value of 240 mg KOH/g) was added to propylene glycol (60 parts), and the mixture was then stirred at raised temperatures of 90°C to 120°C for 5 hours to obtain a 40% solution of Joncryl 690. The mixture was then cooled down to 70°C to 90°C, added with sodium hydroxide (4.1 parts) and stirred for 1 hour. Then, the mixture was further added with deionized water (180 parts) and 0.1 parts of Surfynol 104 (manufactured by Nissin Chemical Industry Co., Ltd.), and stirred for 1 hour while keeping a temperature of 70°C to 95°C to obtain an emulsion liquid (A) of Joncryl 690.

The resulting emulsion liquid (A) was subjected to dispersion treatment for about 15 hours in a sand mill using glass beads having a diameter of 0.2 mm under cooling. After the dispersion treatment, filtration was carried out with glass fiber filter paper GC-50 (manufactured by Toyo Roshi Kaisha Ltd., filter pore diameter = 0.5 µm) to obtain an emulsion liquid 3 of Joncryl 690 from which components having large particle size were removed.

### [Emulsion Liquid 4]

To sodium hydroxide (3.1 parts), deionized water (96.9 parts), and propylene glycol (60 parts) was added 40 parts of Joncryl 678 (a styrene-(meth)acrylic copolymer, manufactured by BASF, having in its molecule a skeleton of formula (2) with a weight-average molecular weight of 8,500, a glass transition temperature of 85°C, and an acid value of 215 mg KOH/g), the mixture was then stirred at raised temperatures of 90°C to 120°C for 5 hours, and an emulsion liquid 4 of Joncryl 678 was obtained.

### [Emulsion Liquid 5]

To potassium hydroxide (4.3 parts), deionized water (95.7 parts), and propylene glycol (60 parts) was added 40 parts of Joncryl 678 (a styrene-(meth)acrylic copolymer, manufactured by BASF, having in its molecule a skeleton of formula (2) with a weight-average molecular weight of 8,500, a glass transition temperature of 85°C, and an acid value of 215 mg KOH/g), the mixture was then stirred at raised temperatures of 90°C to 120°C for 5 hours, and an emulsion liquid 5 of Joncryl 678 was obtained.

### [Emulsion Liquid 6]

To lithium hydroxide (1.9 parts), deionized water (98.1 parts), and propylene glycol (60 parts) was added 40 parts of Joncryl 678 (a styrene-(meth)acrylic copolymer, manufactured by BASF, having in its molecule a skeleton of formula (2) with a weight-average molecular weight of 8,500, a glass transition temperature of 85°C, and an acid value of 215 mg KOH/g), the mixture was then stirred at raised temperatures of 90°C to 120°C for 5 hours, and an emulsion liquid 6 of Joncryl 678 was obtained.

### [Aqueous Solution 1]

A mixture was obtained by mixing 40 parts of Joncryl 690 (a styrene-(meth)acrylic copolymer, manufactured by BASF, having in its molecule a skeleton of formula (3) with a weight-average molecular weight of 16,500, a glass transition temperature of 102°C, and an acid value of 240 mg KOH/g), sodium hydroxide (6.8 parts), deionized water (153.0 parts), 0.1 parts of Proxel GXL (manufactured by Arch Chemicals, Inc.), and 0.1 parts of Surfynol 104 (manufactured by Nissin Chemical Industry Co., Ltd.), and stirred at raised temperatures of 70°C to 95°C for 10 hours to obtain a 20% aqueous solution 1 of Joncryl 690.

### [Examples 1 to 19 and Comparative Examples 1 to 4] - Preparation of Ink Dispersion Composition -

Glass beads having a diameter of 0.2 mm were respectively added to the mixtures of the components listed in Tables 1 to 2, and dispersion treatment was carried out for about 15 hours in a sand mill under water cooling. Deionized water was added to each obtained liquid so that the content of dyes in the total mass of the liquid was adjusted to 15%. The resulting liquids were respectively filtered through glass fiber filter paper GC-50 (manufactured by ADVANTEC Co., Ltd.) to obtain ink dispersion compositions of examples and comparative examples.

### [Examples 20 to 38 and Comparative Examples 5 to 8] - Preparation of Water-based Ink Containing Ink Dispersion Composition -

The components listed in Tables 4 to 5 were added to each ink dispersion composition (40 parts) obtained in Examples 1 to 19 and Comparative Examples 1 to 4 so that the content of dyes in the total mass of the liquid was adjusted to 6.0%. The resulting liquids were respectively filtered through glass fiber filter paper GC-50 (manufactured by ADVANTEC Co., Ltd.) to obtain water-based inks of Examples 20 to 38 and Comparative Examples 5 to 8.

**[Table 1]**

| Ink dispersion composition | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Component (A) dye and/or pigment | Or25 | 30 | 30 | 30 | 30 | | | | | | 30 | | |
| | R60 | | | | | 30 | | | | | | 30 | |
| | B360 | | | | | | 30 | | | | | | 30 |
| | B359 | | | | | | | 30 | | | | | |
| | Y54 | | | | | | | | 30 | | | | |
| | B77 | | | | | | | | | 30 | | | |
| Component (B) styrene-(meth)acrylic copolymer-containing emulsion liquid | Emulsion liquid 1 | 78 | | | | | | | | | | | |
| | Emulsion liquid 2 | | | | | 78 | 78 | 78 | 144 | 144 | 144 | 144 | 144 |
| | Emulsion liquid 3 | | 78 | | 66 | | | | | | | | |
| | Emulsion liquid 4 | | | 78 | | | | | | | | | |
| | Emulsion liquid 5 | | | | | | | | | | | | |
| | Emulsion liquid 6 | | | | | | | | | | | | |
| Aqueous solution | Aqueous solution 1 | | | | 4 | | | | | | | | |
| Component (C) | Propylene glycol | 10 | 10 | 10 | 10 | 10 | 10 | 10 | 10 | 10 | 10 | 10 | 10 |
| Other components | 10%SF104PG | 0.4 | 0.4 | 0.4 | 0.4 | 0.4 | 0.4 | 0.4 | 0.4 | 0.4 | 0.4 | 0.4 | 0.4 |
| | Proxel GXL | 0.3 | 0.3 | 0.3 | 0.3 | 0.3 | 0.3 | 0.3 | 0.3 | 0.3 | 0.3 | 0.3 | 0.3 |
| | Deionized water | 81.3 | 81.3 | 81.3 | 89.3 | 81.3 | 81.3 | 81.3 | 15.3 | 15.3 | 15.3 | 15.3 | 15.3 |
| Total | | 200 | 200 | 200 | 200 | 200 | 200 | 200 | 200 | 200 | 200 | 200 | 200 |
| (i) Sodium concentration (ppm) | | 3198 | 3056 | 2410 | 2545 | 3102 | 3060 | 3510 | 5640 | 5438 | 5320 | 5352 | 5728 |
| (ii) Potassium concentration (ppm) | | 67 | 106 | 55 | 60 | 99 | 87 | 201 | 159 | 178 | 168 | 155 | 213 |
| (iii) Lithium concentration (ppm) | | 0 | 0 | 0 | 0 | 0 | 0 | 0 | 0 | 0 | 0 | 0 | 0 |
| (i)+(ii) (ppm) | | 3265 | 3162 | 2465 | 2605 | 3201 | 3147 | 3711 | 5799 | 5616 | 5488 | 5507 | 5941 |
| (i)+(ii)+(iii) (ppm) | | 3265 | 3162 | 2465 | 2605 | 3201 | 3147 | 3711 | 5799 | 5616 | 5488 | 5507 | 5941 |

**[Table 2]**

| Ink dispersion composition | | Example | | | | | | | Comparative Example | | | |
|---|---|---|---|---|---|---|---|---|---|---|---|---|
| | | 13 | 14 | 15 | 16 | 17 | 18 | 19 | 1 | 2 | 3 | 4 |
| Component (A) dye and/or pigment | Or25 | | 30 | | | | | 30 | 30 | | | |
| | R60 | | | 30 | | | | | | 30 | | |
| | B360 | | | | 30 | | | | | | 30 | |
| | B359 | | | | | 30 | | | | | | |
| | Y54 | 30 | | | | | 30 | | | | | 30 |
| | B77 | | | | | | | | | | | |
| Component (B) styrene-(meth)acrylic copolymer-containing emulsion liquid | Emulsion liquid 1 | | | | | | | | | | | |
| | Emulsion liquid 2 | 78 | | | | | | | | | | |
| | Emulsion liquid 3 | | | | | | | | | | | |
| | Emulsion liquid 4 | | | | | | | | | | | |
| | Emulsion liquid 5 | | 120 | 120 | 90 | 60 | 85 | | | | | |
| | Emulsion liquid 6 | | | | | | | 85 | | | | |
| Aqueous solution | Aqueous solution 1 | | | | | | | | 44 | 44 | 44 | 44 |
| Component (C) | Propylene glycol | 10 | 10 | 10 | 10 | 10 | 10 | 10 | | | | |
| Other components | 10%SF104PG | 0.4 | 0.4 | 0.4 | 0.4 | 0.4 | 0.4 | 0.4 | 0.4 | 0.4 | 0.4 | 0.4 |
| | Proxel GXL | 0.3 | 0.3 | 0.3 | 0.3 | 0.3 | 0.3 | 0.3 | 0.3 | 0.3 | 0.3 | 0.3 |
| | Deionized water | 81.3 | 39.3 | 39.3 | 69.3 | 99.3 | 74.3 | 74.3 | 125.3 | 125.3 | 125.3 | 125.3 |
| Total | | 200 | 200 | 200 | 200 | 200 | 200 | 200 | 200 | 200 | 200 | 200 |
| (i) Sodium concentration (ppm) | | 2877 | 211 | 183 | 122 | 105 | 117 | 180 | 6830 | 7545 | 7603 | 6994 |
| (ii) Potassium concentration (ppm) | | 53 | 2526 | 2340 | 1755 | 1263 | 1895 | 19 | 66 | 75 | 57 | 71 |
| (iii) Lithium concentration (ppm) | | 0 | 0 | 0 | 0 | 0 | 0 | 2653 | 0 | 0 | 0 | 0 |
| (i)+(ii) (ppm) | | 2930 | 2737 | 2523 | 1877 | 1368 | 2012 | 199 | 6896 | 7620 | 7660 | 7065 |
| (i)+(ii)+(iii) (ppm) | | 2930 | 2737 | 2523 | 1877 | 1368 | 2012 | 2852 | 6896 | 7620 | 7660 | 7065 |

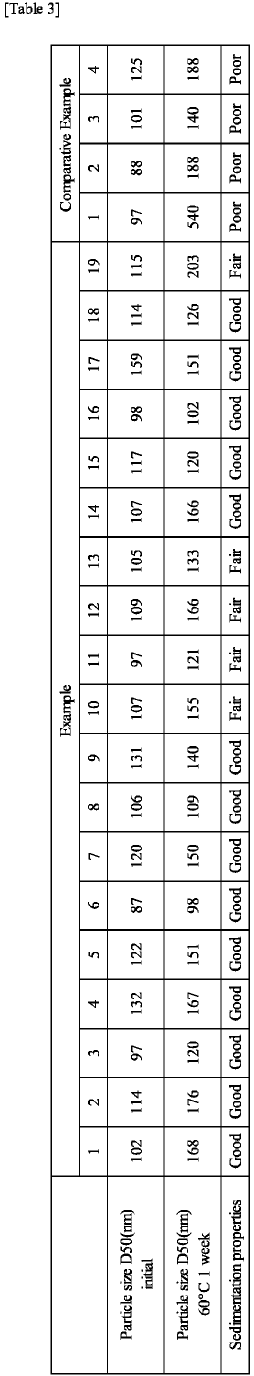

**[Table 4]**

| Water-based ink composition | | Example | | | | | | | | | | | |
|---|---|---|---|---|---|---|---|---|---|---|---|---|---|
| | | 20 | 21 | 22 | 23 | 24 | 25 | 26 | 27 | 28 | 29 | 30 | 31 |
| Ink dispersion composition | Example 1 | 40 | | | | | | | | | | | |
| | Example 2 | | 40 | | | | | | | | | | |
| | Example 3 | | | 40 | | | | | | | | | |
| | Example 4 | | | | 40 | | | | | | | | |
| | Example 5 | | | | | 40 | | | | | | | |
| | Example 6 | | | | | | 40 | | | | | | |
| | Example 7 | | | | | | | 40 | | | | | |
| | Example 8 | | | | | | | | 40 | | | | |
| | Example 9 | | | | | | | | | 40 | | | |
| | Example 10 | | | | | | | | | | 40 | | |
| | Example 11 | | | | | | | | | | | 40 | |
| | Example 12 | | | | | | | | | | | | 40 |
| Other components | Glycerin | 26 | 26 | 26 | 26 | 26 | 26 | 26 | 26 | 26 | 26 | 26 | 26 |
| | Propylene glycol | 10 | 10 | 10 | 10 | 10 | 10 | 10 | 10 | 10 | 10 | 10 | 10 |
| | Surfynol 465 | 0.2 | 0.2 | 0.2 | 0.2 | 0.2 | 0.2 | 0.2 | 0.2 | 0.2 | 0.2 | 0.2 | 0.2 |
| | Proxel GXL | 0.1 | 0.1 | 0.1 | 0.1 | 0.1 | 0.1 | 0.1 | 0.1 | 0.1 | 0.1 | 0.1 | 0.1 |
| | TEA-80 | 0.1 | 0.1 | 0.1 | 0.1 | 0.1 | 0.1 | 0.1 | 0.1 | 0.1 | 0.1 | 0.1 | 0.1 |
| | Deionized water | Residual quantity | Residual quantity | Residual quantity | Residual quantity | Residual quantity | Residual quantity | Residual quantity | Residual quantity | Residual quantity | Residual quantity | Residual quantity | Residual quantity |
| | Total | 100.0 | 100.0 | 100.0 | 100.0 | 100.0 | 100.0 | 100.0 | 100.0 | 100.0 | 100.0 | 100.0 | 100.0 |

**[Table 5]**

| Water-based ink composition | | Example | | | | | | | Comparative Example | | | |
|---|---|---|---|---|---|---|---|---|---|---|---|---|
| | | 32 | 33 | 34 | 35 | 36 | 37 | 38 | 5 | 6 | 7 | 8 |
| Ink dispersion composition | Example 13 | 40 | | | | | | | | | | |
| | Example 14 | | 40 | | | | | | | | | |
| | Example 15 | | | 40 | | | | | | | | |
| | Example 16 | | | | 40 | | | | | | | |
| | Example 17 | | | | | 40 | | | | | | |
| | Example 18 | | | | | | 40 | | | | | |
| | Example 19 | | | | | | | 40 | | | | |
| | Comparative Example 1 | | | | | | | | 40 | | | |
| | Comparative Example 2 | | | | | | | | | 40 | | |
| | Comparative Example 3 | | | | | | | | | | 40 | |
| | Comparative Example 4 | | | | | | | | | | | 40 |
| Other components | Glycerin | 26 | 26 | 26 | 26 | 26 | 26 | 26 | 26 | 26 | 26 | 26 |
| | Propylene glycol | 10 | 10 | 10 | 10 | 10 | 10 | 10 | 10 | 10 | 10 | 10 |
| | Surfynol 465 | 0.2 | 0.2 | 0.2 | 0.2 | 0.2 | 0.2 | 0.2 | 0.2 | 0.2 | 0.2 | 0.2 |
| | Proxel GXL | 0.1 | 0.1 | 0.1 | 0.1 | 0.1 | 0.1 | 0.1 | 0.1 | 0.1 | 0.1 | 0.1 |
| | TEA-80 | 0.1 | 0.1 | 0.1 | 0.1 | 0.1 | 0.1 | 0.1 | 0.1 | 0.1 | 0.1 | 0.1 |
| | Deionized water | Residual quantity | Residual quantity | Residual quantity | Residual quantity | Residual quantity | Residual quantity | Residual quantity | Residual quantity | Residual quantity | Residual quantity | Residual quantity |
| | Total | 100.0 | 100.0 | 100.0 | 100.0 | 100.0 | 100.0 | 100.0 | 100.0 | 100.0 | 100.0 | 100.0 |

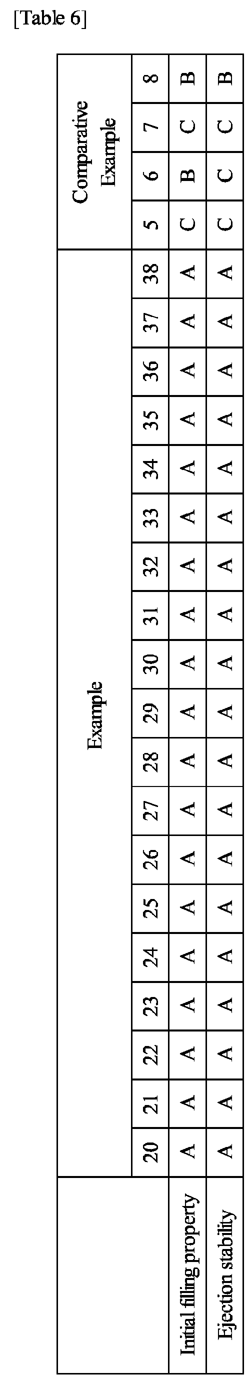

The numbers in the tables, for which no units are designated, each represent "the number of parts", and the abbreviations are as follows:

| | |
|---|---|
| Or25: | C.I. Disperse Orange 25 |
| R60: | C.I. Disperse Red 60 |
| B360: | C.I. Disperse Blue 360 |
| B359: | C.I. Disperse Blue 359 |
| Y54: | C.I. Disperse Yellow 54 |
| B77: | C.I. Disperse Blue 77 |
| 10% SF 104 PG: | Surfynol 104 diluted to 10 % concentration with propylene glycol |
| Surfynol 104: | acetylene glycol surfactant (manufactured by Air Products and Chemicals, Inc.), a defoamer |
| Proxel GXL: | preservative (manufactured by Lonza) |
| TEA-80: | 80% triethanolamine (manufactured by Junsei Chemical Co., Ltd.) |
| Surfynol465: | acetylenic glycol surfactant (manufactured by Nissin Chemical Industry Co., Ltd.), a defoamer. |

### [Evaluation Results]

For Examples 1 to 19 and Comparative Examples 1 to 4, the following tests were conducted. The results are summarized in Table 3.

### [Particle Size Change Test for Confirmation of Sedimentation Properties]

The median diameter (D50, number-average particle size) of the colorant in each ink dispersion composition in an initial state and after stored for 1 week at 60°C was measured with MICRO TRAC UPA EX150 (manufactured by Microtrac Bel).

The presence or absence of sediment was visually confirmed for each ink dispersion composition after stored at 60°C for 1 week, and the evaluation was made according to the following criteria.

| | |
|---|---|
| Good: | No sedimentation occurred. |
| Fair: | Slight sedimentation occurred. |
| Poor: | Significant sedimentation occurred. |

When observed with an STEM (scanning transmission electron microscope), the ink dispersion composition of each of the examples contained a colorant of a core-shell structure with dyes as the core layer and a styrene-(meth)acrylic copolymer as the shell layer, whereas the ink dispersion composition of none of the comparative examples contained a colorant of a core-shell structure.

### [Evaluation Results of Water-based Inks]

For the water-based inks of Examples 20 to 38 and Comparative Examples 5 to 8, the following evaluation tests were conducted. The results are summarized in Table 6.

### [Evaluation on Initial Filling Property]

Each prepared ink was stored at 60°C for 1 week, and then charged into an inkjet printer (PX-504A manufactured by Seiko Epson Corp.). Initial filling was performed to effect an initial filling operation for the head. Subsequently, to confirm whether the ink was able to be ejected from all nozzles of the head, nozzle check was conducted. In the case where there was any nozzle from which the ink was not able to be ejected, the head was subjected to cleaning (sucking the ink inside the nozzles), and then nozzle check was conducted again. Based on the number of cleaning operations required to enable the ejection of the ink from all nozzles, the initial filling property was evaluated according to the following evaluation criteria:
A: The ink was ejected from all nozzles with only the initial filling sequence.
B: The number of cleaning operations required to enable the ejection of the ink from all nozzles was 2.
C: The number of cleaning operations required to enable the ejection of the ink from all nozzles was 3 or more.

### [Evaluation on Ejection Stability]

After confirming that the ink was able to be ejected from all nozzles of the head in the above "Evaluation on Initial Filling Property", a 100% duty image was printed on PPC paper (TP PAPER, NBS Ricoh Co., Ltd.) by solid printing. Based on whether there was no pin missing and to what extent the ink was able to be continuously ejected, the ejection stability during printing was evaluated according to the following three criteria:
A: The number of sheets for which the ink was able to be continuously ejected was 50 or more.
B: The number of sheets for which the ink was able to be continuously ejected was 20 or more and less than 30.
C: The number of sheets for which the ink was able to be continuously ejected was 10 or less, and a lot of pin missing occurred.

From the above results, in the ink dispersion composition of each of Examples 1 to 19, neither sedimentation nor a significant change in particle size was observed, and the storage stability was excellent. On the other hand, in each of Comparative Examples 1 to 4, an increase in particle size was observed. Moreover, the water-based inks prepared using the ink dispersions of Examples 1 to 19 were superior in initial filling property and ejection stability to the water-based inks prepared using the ink dispersions of Comparative Examples 1 to 4. This demonstrates that each ink dispersion composition according to the present disclosure and the water-based ink using the same are superior to the comparative examples.

### INDUSTRIAL APPLICABILITY

The ink dispersion composition and the water-based ink according to the present disclosure have high storage stability, and are very useful particularly for water-based ink in inkjet applications.

## Claims

1. An ink dispersion composition comprising:
(A) a dye and/or a pigment;
(B) a styrene-(meth)acrylic copolymer; and
(C) a compound represented by the following formula (1): 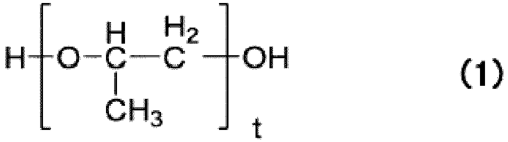 where t represents 1 to 5,
wherein a content of (C) the compound represented by the formula (1) is more than 0.18 mass%, and
a sum total of a sodium ion concentration, a potassium ion concentration, and a lithium ion concentration in the ink dispersion composition is 6800 ppm or less.

2. The ink dispersion composition according to claim 1, wherein the sum total of the sodium ion concentration, the potassium ion concentration, and the lithium ion concentration in the ink dispersion composition is 1000 ppm or more and 6800 ppm or less.

3. The ink dispersion composition according to claim 1 or 2, wherein a sum total of the sodium ion concentration and the potassium ion concentration in the ink dispersion composition is 100 ppm or more and 6800 ppm or less.

4. The ink dispersion composition according to any one of claims 1 to 3, wherein the component (A) and the component (B) form a core-shell structure, and a core layer of the core-shell structure is the component (A) and a shell layer of the core-shell structure is the component (B).

5. The ink dispersion composition according to any one of claims 1 to 4, wherein the component (A) is a dye.

6. The ink dispersion composition according to any one of claims 1 to 5, wherein the component (A) is at least one dye selected from a disperse dye, an oil-soluble dye, and a vat dye.

7. The ink dispersion composition according to any one of claims 1 to 6, wherein the component (A) is at least one dye selected from C.I. Disperse Yellow 54, C.I. Disperse Orange 25, C.I. Disperse Red 60, C.I. Disperse Blue 72, 359, and 360, C.I. Disperse Brown 26 and 27, and C.I. Solvent Orange 60.

8. The ink dispersion composition according to any one of claims 1 to 7, wherein the component (B) has a weight-average molecular weight of 1000 or more and 20000 or less.

9. The ink dispersion composition according to any one of claims 1 to 8, wherein the component (B) has a glass transition temperature of 45°C or more and 135°C or less.

10. The ink dispersion composition according to any one of claims 1 to 9, wherein the component (B) has an acid value of 50 mg KOH/g or more and 250 mg KOH/g or less.

11. The ink dispersion composition according to any one of claims 1 to 10, wherein the component (B) is a styrene-acrylic copolymer having, in a molecule thereof, a skeleton represented by the following formula (2) or (3): 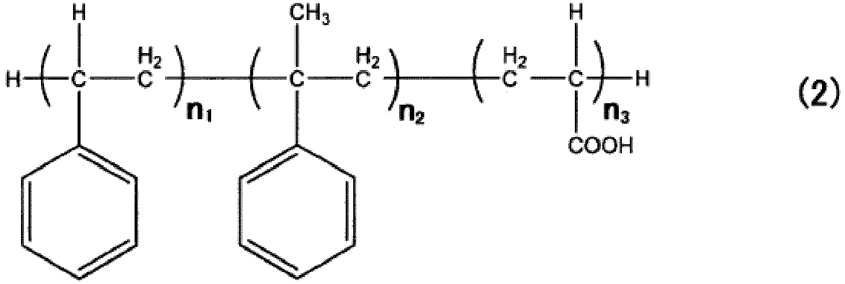 where n₁ to n₃ each represent an integer of 1 to 30, 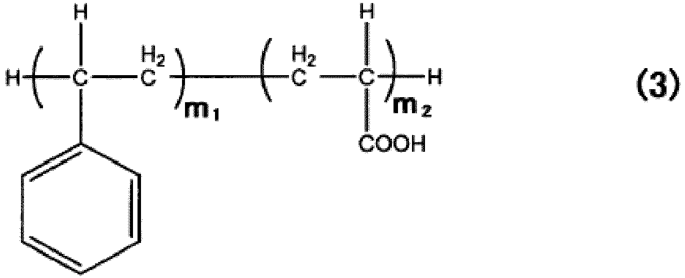 where m₁ and m₂ each represent an integer of 1 to 43.

12. The ink dispersion composition according to any one of claims 1 to 11, wherein t is 2 in the component (C).

13. The ink dispersion composition according to any one of claims 1 to 12, further comprising:
(D) a compound having, in a molecule thereof, both substituents of an amino group and a sulfo group.

14. The ink dispersion composition according to claim 13, wherein the component (D) is a compound represented by the following formula (4):
H₂N-R-SO₃H (4)
where R represents an alkylene group, an alkylidene group, or an arylene group which may have a substituent.

15. The ink dispersion composition according to any one of claims 1 to 14, further comprising:
(E) a water-soluble organic solvent.

16. The ink dispersion composition according to claim 15, wherein the component (E) is a water-soluble organic solvent having, in a molecule thereof, one or more hydroxy groups.

17. The ink dispersion composition according to any one of claims 1 to 16, wherein the component (A) has a number-average particle size of 10 nm to 500 nm.

18. A method of producing the ink dispersion composition according to any one of claims 1 to 17, the method comprising:
neutralizing and dissolving with an alkaline aqueous solution.

19. The ink dispersion composition according to any one of claims 1 to 17, further comprising:
(F) a defoamer.

20. The ink dispersion composition according to claim 19, wherein the component (F) is a nonionic surfactant.

21. The ink dispersion composition according to claim 19 or 20, further comprising:
(G) a preservative.

22. A water-based ink comprising:
the ink dispersion composition according to any one of claims 1 to 17 and 19 to 21.
